# DEMANDE DE BREVET EUROPEEN

(11) **EP 4 116 225 A1**
(43) Date de publication de la demande: **11.01.2023**
(21) Numéro de dépôt: 22180484.2
(22) Date de dépôt: 22.06.2022
(51) Int. Cl.: B65D 88/62, B60P 3/24, B65D 90/02, B65D 90/04

(54) **CUVE DE STOCKAGE DE PRODUITS A VIDANGE HORIZONTALE PAR L'INTERMÉDIAIRE D'UNE MEMBRANE, ET VÉHICULE, EN PARTICULIER HYDROCUREUR, POURVU D'UNE TELLE CUVE**

(30) Priorité: 08.07.2021 FR 2107423
(71) Demandeur: ORTEC EXPANSION, 13799 Aix En Provence Cedex 3 (FR)
(72) Inventeur: RIVARD, Daniel, 75007 PARIS (FR)
(74) Mandataire: Gevers & Orès

(57) **Abrégé**

- Cuve de stockage de produits à vidange horizontale par l'intermédiaire d'une membrane, et véhicule, en particulier hydrocureur, pourvu d'une telle cuve.
- La cuve (1) pour stocker des produits, en particulier des produits semi-liquides, pâteux ou solides pulvérulents, comporte une virole (2) pourvue d'une ouverture (5) à une extrémité longitudinale (6) et une porte (7) apte à fermer cette ouverture (5), une membrane (9) souple et étanche aux gaz et aux liquides, destinée à recevoir les produits à stocker, ladite membrane (9) étant pourvue d'une ouverture (10), étant agencée à l'intérieur de la cuve (1) de sorte que son ouverture (10) est en regard de l'ouverture (5) de la virole (2), et étant fixée suivant une zone de fixation annulaire à la face interne de la virole (2) autour de son ouverture (10) de manière à créer un espace dit libre (15) fermé, et un système (16) pour générer une mise en pression et une mise en dépression de cet espace libre (15), une vidange rapide et complète de la cuve (1) pouvant être réalisée grâce à ladite membrane (9) et audit système (16).

## Description

### DOMAINE TECHNIQUE

La présente invention concerne une cuve de stockage de produits à vidange horizontale par l'intermédiaire d'une membrane, et un véhicule, en particulier un hydrocureur, pourvu d'une telle cuve.

### ÉTAT DE LA TECHNIQUE

La présente invention s'applique à tout type de cuve (ou citerne), mobile ou fixe, qui est destinée au stockage de produits et notamment des produits semi-liquides, des produits pâteux ou des solides pulvérulents.

Bien que non exclusivement, la présente invention s'applique plus particulièrement à une cuve d'un véhicule de collecte de déchets, et notamment d'un hydrocureur d'assainissement ou industriel. Un hydrocureur d'assainissement est destiné, en particulier, à assurer des opérations de curage et de pompage de réseaux d'eaux usées et d'ouvrages d'assainissement, et un hydrocureur industriel est destiné à des travaux de nettoyage d'équipements et d'installations industriels.

Actuellement, la vidange d'une cuve d'un hydrocureur est réalisée, soit par le basculement de la cuve (ou citerne) généralement à 40°, soit par l'intermédiaire d'une cloison mobile qui est apte à se déplacer dans les deux sens, grâce à la génération d'une pression de part et d'autre de la cloison.

Toutefois, chacune de ces deux solutions usuelles (basculement ou cloison mobile) présente des inconvénients.

Plus précisément, la solution prévoyant un basculement de la cuve présente, notamment, les inconvénients suivants :
- cette solution nécessite une articulation arrière robuste et un vérin de basculement lourd, nécessitant un débit hydraulique important ;
- le dispositif de basculement oblige les circuits (vide, liaisons hydrauliques, liaisons air comprimé, azote, eau THP) nécessitant une connexion avec la cuve de passer à proximité immédiatement de l'axe d'articulation de la cuve et nécessite une connexion ou un joint tournant à la hauteur de l'axe de basculement de la cuve ;

- le basculement de la cuve à 40° génère un risque de renversement de l'ensemble équipement-porteur, d'autant plus que les basculements sont souvent réalisés sur des terrains instables avec des risques d'accidents réels ; et
- l'ensemble formé de l'articulation arrière et du vérin de basculement présente une masse importante, générant une perte élevée de charge utile.

En outre, la solution prévoyant une cloison déplaçable présente, quant à elle, notamment, les inconvénients suivants :
- elle nécessite un système d'étanchéité entre la cloison et la cuve afin de pouvoir augmenter la pression générée d'un côté ou de l'autre de la cloison pour son déplacement. Cette étanchéité obtenue par l'adhérence du système d'étanchéité est un frein au déplacement de la cloison, nécessitant de générer une pression importante sur la cloison pour la déplacer ;
- le déplacement de la cloison risque de produire, par frottement des solides sur le fond de la virole, des points chauds (risque ATEX) ou de l'érosion par abrasion (risque de perte d'épaisseur de la virole et manque de résistance mécanique suffisante pour une cuve sous pression) ;
- la cloison en position de travail doit être bloquée suivant des positions prédéfinies ; et
- l'ensemble de la cloison présente une masse importante, générant une perte élevée de charge utile.

Ces deux solutions usuelles ne permettent plus de répondre de façon satisfaisante aux besoins d'exploitation tant au niveau de la sécurité qu'au niveau de la charge utile.

### EXPOSÉ DE L'INVENTION

La présente invention a pour objet de remédier aux inconvénients précités. Elle concerne une cuve pour stocker des produits, ladite cuve comportant une virole pourvue d'une ouverture à une extrémité longitudinale arrière et une porte apte à fermer cette ouverture.

Selon l'invention, ladite cuve comporte, de plus, au moins :
- une membrane souple et étanche aux gaz et aux liquides, destinée à recevoir les produits à stocker, ladite membrane étant pourvue d'une ouverture, étant agencée à l'intérieur de la cuve de sorte que son ouverture est en regard de l'ouverture de la virole, et étant fixée suivant une zone de fixation annulaire à la face interne de la virole autour de son ouverture de manière à créer un espace dit libre, fermé, entre la membrane et la cuve, la membrane étant fixée à une distance prédéterminée de l'ouverture de la virole de manière à former une zone dite arrière entre la zone de fixation et l'ouverture de la virole, ladite distance étant comprise entre 30 centimètres et 1 mètre ; et
- un système pour générer une mise en pression et une mise en dépression de l'espace libre entre la cuve et la membrane.

Ainsi, grâce à l'invention, l'utilisation de la membrane souple permet d'obtenir un système de vidange efficace et léger, qui permet de remédier aux inconvénients des solutions usuelles précitées, comme précisé ci-dessous.

En outre, comme également décrit ci-dessous, la vidange de cette cuve peut être réalisée à l'horizontale (sans basculement), ce qui permet notamment de réduire l'encombrement. De plus, cette vidange peut être réalisée en toute sécurité, rapidement et totalement.

En outre, la zone arrière entre la zone de fixation et l'ouverture de la virole permet de disposer d'une zone pour agencer des équipements et notamment un orifice de génération de vide comme précisé ci-dessous.

Dans un mode de réalisation préféré, la membrane est configurée pour :
- pouvoir être complètement plaquée contre la face interne de la virole sous l'effet d'une mise en dépression générée par ledit système ;
- pouvoir être retournée et sortie de la cuve, à travers ladite porte ouverte, sous l'effet d'une mise en pression générée par ledit système,

Avantageusement, la membrane est fixée à une distance prédéterminée de l'ouverture de la virole, qui est comprise entre 30 centimètres et 1 mètre, et qui est de préférence de l'ordre de 70 centimètres.

En outre, de façon avantageuse, la cuve comporte au moins l'un des éléments suivants :
- au moins un tendeur élastique fixé d'une part à une face interne avant de la virole et d'autre part à une face interne arrière de la membrane lorsqu'elle est retournée vers l'extérieur de la cuve ;
- au moins un câble de maintien rigide fixé d'une part à la face interne avant de la virole et d'autre part à la face interne arrière de la membrane lorsqu'elle est retournée vers l'extérieur de la cuve.

Dans le cadre de la présente invention, la membrane peut être fixée de différentes manières à la face interne de la cuve. Toutefois, dans un mode de réalisation préféré, la membrane est fixée par pincement entre une couronne fixée sur la face interne de la cuve et au moins une contre-plaque, ce qui permet notamment de faciliter les opérations de maintenance.

Par ailleurs, de façon avantageuse, la membrane est réalisée en un matériau composite (relativement fin) comprenant différentes couches superposées, formées respectivement au moins d'une toile étanche (à l'air et aux eaux de condensation), d'un tissu (apportant la résistance mécanique nécessaire) et d'une peau antistatique résistant mécaniquement aux chocs et à l'abrasion des déchets solides et chimiquement à l'agression d'acides, de bases, d'hydrocarbures, ...

Dans un mode de réalisation particulier, la cuve comporte au moins deux vérins agencés à l'arrière de la cuve, aptes à être amenés d'une position rétractée à une position étendue lorsque la membrane est sortie de la cuve.

En outre, dans un mode de réalisation particulier, la cuve comporte une couronne à haute pression agencée à l'arrière de la zone de fixation de la membrane sur la cuve.

En outre, avantageusement, le système pour générer une mise en pression et une mise en dépression comprend au moins un orifice pratiqué dans la cuve et aboutissant dans ledit espace libre. De façon avantageuse, l'orifice est pratiqué dans le fond de la cuve à l'extrémité longitudinale opposée à celle pourvue de l'ouverture.

Par ailleurs, de façon avantageuse, le système pour générer une mise en pression et une mise en dépression comprend un générateur d'air comprimé et un générateur de vide.

Avantageusement, ledit générateur de vide ou un générateur de vide dédié de la cuve est également configuré pour générer une mise en dépression d'un espace interne à l'intérieur de la membrane, à travers une ouverture pratiquée dans ladite zone arrière, en vue d'un pompage de produits dans ladite membrane.

En outre, de façon avantageuse, la porte de la cuve est pourvue d'au moins un orifice de remplissage et d'évacuation et de moyens configurés pour pouvoir ouvrir et fermer ledit orifice de remplissage et d'évacuation.

La présente invention concerne également un véhicule, en particulier un hydrocureur, qui comporte au moins une cuve, telle que celle décrite ci-dessus.

La présente invention concerne également plusieurs procédés relatifs à l'utilisation de ladite cuve.

Premièrement, elle comprend un procédé de remplissage de la cuve, ledit procédé de remplissage comprenant au moins les étapes suivantes, consistant à :
- fermer la porte de la cuve ;
- générer une mise en dépression de l'espace libre entre la cuve et la membrane, à l'aide du système de mise en dépression, de manière à plaquer la membrane contre la face interne de la cuve ;
- générer une mise en dépression de l'espace interne à l'aide du système de mise en dépression afin que la pression atmosphérique pousse les produits dans cet espace interne, à travers l'orifice de remplissage, à l'intérieur de la membrane ; et
- quand le remplissage est terminé, arrêter le maintien en dépression de l'espace interne.

Deuxièmement, elle comprend également un procédé de vidange de la cuve, ledit procédé de vidange comprenant au moins les étapes suivantes, consistant à :
- ouvrir la porte de la cuve ;
- générer une mise en pression de l'espace libre entre la cuve et la membrane, à l'aide du système de mise en pression, de manière à repousser la membrane et la déplacer, ce déplacement générant une éjection des produits à travers la porte en position ouverte ; et
- quand la vidange est terminée, arrêter la mise en pression de l'espace libre.

Troisièmement, elle comprend, en outre, un procédé d'essorage de produits de la cuve, ledit procédé d'essorage comprenant au moins les étapes suivantes, consistant à :
- la porte de la cuve étant fermée, générer une mise en pression de l'espace libre entre la cuve et la membrane, à l'aide du système de mise en pression, de manière à repousser la membrane et la déplacer, ce déplacement comprimant les produits présents dans la cuve de manière à générer une séparation des jus qui sont évacués par l'orifice d'évacuation (ou de vidange ou de décantation) qui est ouvert ; et
- quand l'essorage est terminé, arrêter la mise en pression de l'espace libre et fermer l'orifice d'évacuation.

### BRÈVE DESCRIPTION DES FIGURES

Les figures annexées feront bien comprendre comment l'invention peut être réalisée. Sur ces figures, des références identiques désignent des éléments semblables.
La figure 1 est une vue schématique en coupe d'une cuve de stockage de produits, dans une position ouverte.
La figure 2 est une vue schématique en coupe de la cuve de stockage de produits, dans une position fermée.
La figure 3 est une vue similaire à celle de la figure 1, dans une position ouverte, avec la membrane complètement sortie.
Les figures 4A à 4D sont des vues schématiques en coupe d'une cuve de stockage de produits, illustrant différentes étapes successives de déplacement de la membrane d'une position plaquée contre la cuve à une position complètement déployée, lors d'une vidange de la cuve.
La figure 5 est une vue schématique partielle, en coupe, d'un mode de réalisation préféré d'une membrane souple et étanche.
La figure 6 est une vue en plan d'un exemple d'hydrocureur pourvu notamment d'une cuve de stockage de produits.
La figure 7 est une vue similaire à celle de la figure 3, illustrant un mode de réalisation particulier.

### DESCRIPTION DÉTAILLÉE

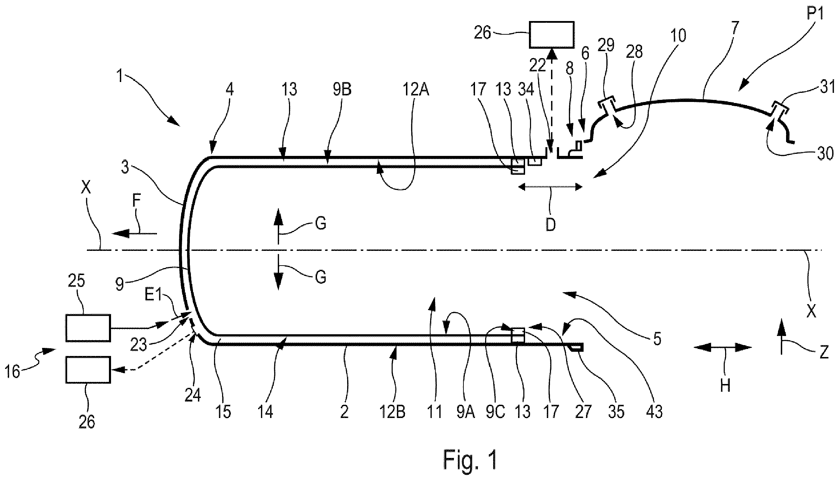

La cuve 1, illustrant l'invention et représentée schématiquement sur la figure 1, est destinée à recevoir et stocker des produits, par exemple en vue d'un transport. La cuve 1 est apte à stocker divers types de produits. Elle est particulièrement adaptée au stockage de produits tels que des produits semi-liquides, des produits pâteux ou des solides pulvérulents.

La cuve 1 peut être utilisée dans des applications variées, comme précisé ci-dessous.

La cuve 1 comporte, comme représenté sur la figure 1, une virole 2, c'est-à-dire une pièce cylindrique creuse, d'axe longitudinal X-X. Dans l'exemple représenté, la virole 2 est réalisée sous forme d'un cylindre droit. La virole de la cuve peut, toutefois, présenter toute autre forme cylindrique dans le cadre de la présente invention.

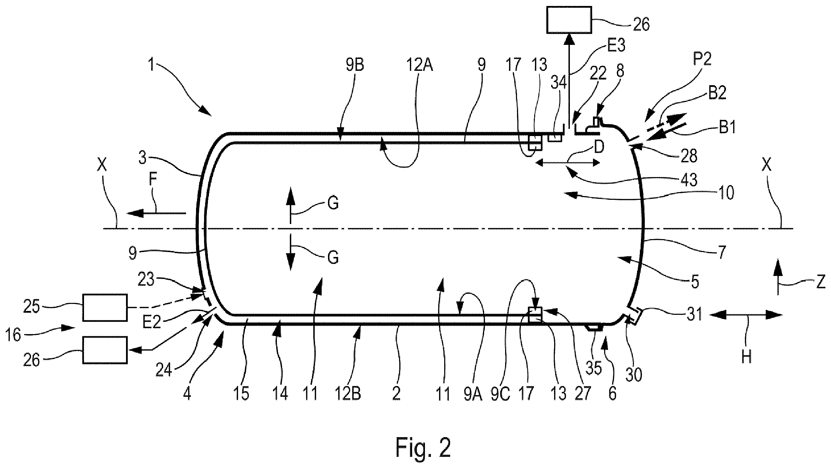

La virole 2 est fermée par un fond 3 à une extrémité longitudinale dite extrémité avant 4 (selon l'axe longitudinal X-X), et elle est pourvue d'une ouverture 5 à l'autre extrémité longitudinale dite extrémité arrière 6. Les termes « avant » et « arrière » sont définis, dans la description suivante, le long de l'axe longitudinal X-X, avec « avant » dans le sens d'une flèche F représentée sur les figures 1 et 2 et « arrière » dans le sens opposé à celui de la flèche F.

Bien entendu, dans le cadre de la présente invention, l'ouverture 5 pourrait également être prévue à l'extrémité avant et le fond 3 à l'extrémité arrière de la cuve.

De plus, les termes « interne » et « externe » sont définis par rapport à l'axe longitudinal X-X, avec « externe » en s'écartant de l'axe longitudinal X-X, comme illustré par des flèches G sur les figures 1 et 2, et « interne » en s'approchant de l'axe longitudinal X-X, en sens inverse à celui des flèches G.

La cuve 1 est disposée horizontalement, c'est-à-dire qu'elle est disposée de sorte que son axe longitudinal X-X est sensiblement parallèle à l'horizontale illustrée par une double flèche H sur les figures 1 et 2.

La direction verticale est illustrée, quant à elle, par une flèche Z. Le terme « haut » est défini dans le sens de la flèche Z et le terme « bas » est défini en sens inverse à celui de la flèche Z.

La cuve 1 comporte, de plus, une porte 7 de type usuel, prévue à l'extrémité arrière 6 de la cuve 1 et configurée pour pouvoir :
- complètement libérer l'ouverture 5 dans une position ouverte P1 telle que représentée sur la figure 1 ; et
- fermer l'ouverture 5 dans une position fermée P2 telle que représentée sur la figure 2.

Pour ce faire, la porte 7 est liée, par des charnières 8 usuelles représentées schématiquement, à la cuve 1, et elle comporte, pour son fonctionnement, des moyens usuels non décrits davantage et non représentés.

La virole 2, le fond 3 et la porte 7 de la cuve 1 peuvent être réalisés en différents matériaux métalliques ou composites, et notamment en inox. De plus, dans l'exemple représenté, le fond 3 est bombé (convexe) vers l'avant et la porte 7 est bombée (convexe) vers l'arrière.

Selon l'invention, ladite cuve 1 comporte, de plus, une membrane 9 qui est, à la fois, souple (ou flexible) et étanche aux gaz et aux liquides. Cette membrane 9 (de face interne 9A) définit un espace interne 11 (ou espace de stockage) destiné à recevoir les produits de stockage.

Pour ce faire, ladite membrane 9 est pourvue d'une ouverture 10 (à l'arrière). La membrane 9 est une poche (ou enveloppe) complètement fermée à l'exception de l'ouverture 10, et elle est agencée à l'intérieur de la cuve 1 de sorte que cette ouverture 10 est en regard de l'ouverture 5 de la virole 2, pourvue de la porte 7.

La membrane 9 est fixée par son extrémité dite ouverte 9C (au niveau de l'ouverture 10) sur la face interne 12A de la virole 2 de la cuve 1, tout autour de sa périphérie, c'est-à-dire selon une zone fixation 27 de forme annulaire de manière à créer un espace dit libre 15, fermé, entre la membrane 9 et la cuve 1.

La membrane 9 est fixée, à l'arrière de la virole 2, à une distance D prédéterminée de l'ouverture 5 de la virole 2 de manière à former une zone dite arrière 43 entre la zone de fixation 27 et l'ouverture 5 de la virole 2. La distance D est comprise entre 30 centimètres et 1 mètre, et elle est de préférence de l'ordre de 70 centimètres. Cette distance D est telle qu'elle permet de laisser un espace (à ladite zone arrière 43) pour la mise en place d'équipements, comme par exemple un orifice 22 destiné à l'aspiration, tel que représenté sur les figures 1 à 3 et 7.

A titre d'illustration non limitative, la membrane 9 présente, par exemple, une épaisseur entre 2 et 8 millimètres.

Par ailleurs, la cuve 1 comporte également un système 16, précisé ci-dessous, pour générer une mise en pression ou une mise en dépression de l'espace libre 15 entre la cuve 1 et la membrane.

Dans le cadre de la présente invention, la membrane 9 peut être fixée de différentes manières à la face interne 12A de la cuve 1.

Toutefois, dans un mode de réalisation préféré, la membrane 9 est fixée par pincement, ce qui permet notamment de faciliter les opérations de maintenance. Pour ce faire, une couronne 13 métallique est fixée, de préférence soudée, sur la face interne 12A de la cuve 1 tout autour de la périphérie de la cuve 1, au niveau de la zone de fixation 27 à la distance D de l'arrière de la cuve 1. L'extrémité ouverte 9C de la membrane 9 est coincée et retenue entre cette couronne 13 et une ou plusieurs contre-plaques de fixation 17, par exemple quatre contre-plaques de fixation 17, qui sont visées sur la couronne 13.

Par ailleurs, dans un mode de réalisation préféré, la membrane 9 est réalisée en un matériau composite 18 comprenant différentes couches superposées présentant des propriétés variées pour permettre de conférer à ladite membrane 9 les caractéristiques recherchées.

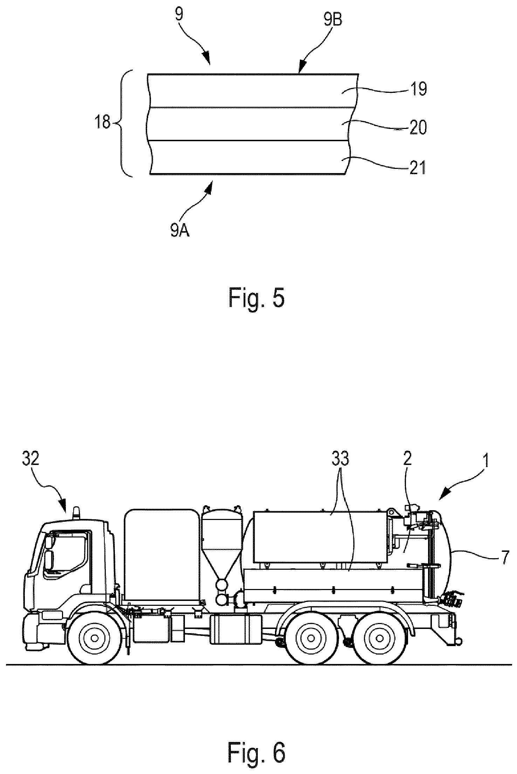

De préférence, la membrane 9 comporte, comme représenté schématiquement sur la figure 5, au moins une toile imperméable 19 (ou étanche aux gaz et aux liquides), un tissu 20 apportant une résistance mécanique à la membrane 9, et une peau 21, de préférence en polytrétrafluoroéthylène PTFE antistatique. La peau 21 qui est prévue sur la face interne 9A de la membrane 9 destinée à venir en contact des produits, apporte une résistance aux chocs mécaniques, à l'agressivité chimique des produits et à l'adhérence des produits. Une membrane 9 ainsi réalisée présente des caractéristiques de souplesse appropriées et de résistance à divers types d'agression, ce qui lui permet de mettre en œuvre efficacement les différentes fonctions dédiés. Elle permet également de protéger la virole 2 contre les différentes agressions potentielles.

En outre, le système 16 pour générer une mise en pression et une mise en dépression comprend des orifices 23 et 24 pratiqués dans la cuve 2 et pourvus de moyens usuels de raccordement de conduit (non représentés). Les orifices 23 et 24 sont pratiqués dans le fond 3 de la cuve 1 à l'extrémité avant 4 opposée à l'extrémité arrière 6 pourvue de l'ouverture 5, vers le bas dudit fond 3.

Dans le mode de réalisation particulier, représenté sur les figures 1 et 2, la cuve 1 comporte, comme élément de mise en pression, un générateur d'air comprimé 25 et, comme élément de mise en dépression, un générateur de vide 26.

Dans le cadre de la présente invention :
- le générateur d'air comprimé 25 peut être tout type de générateur usuel apte à insuffler de l'air comprimé dans l'espace libre 15 à travers l'orifice 23, comme illustré par une flèche E1 sur la figure 1 ; et
- le générateur de vide 26 peut être tout type de générateur de vide usuel, de préférence pneumatique (mais non exclusivement), apte à générer un vide dans l'espace libre 15 à travers l'orifice 24, comme illustré par une flèche E2 sur la figure 2.

Dans une variante de réalisation (non représentée), on peut prévoir un seul orifice pour, à la fois, la mise en pression et la mise en dépression.

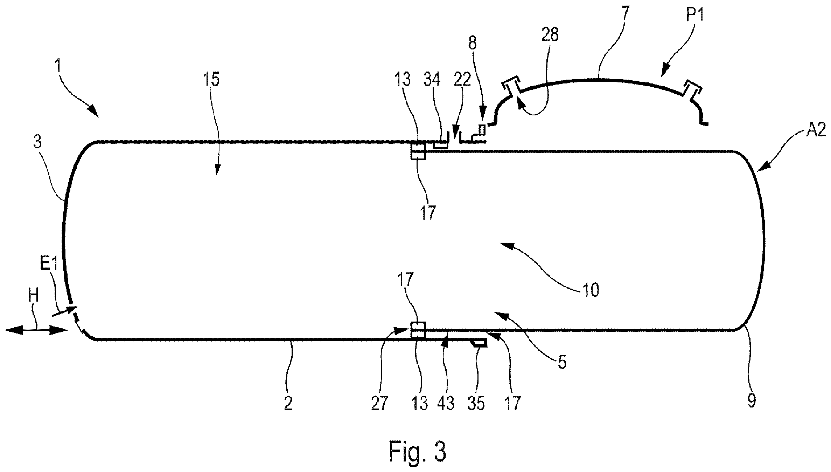

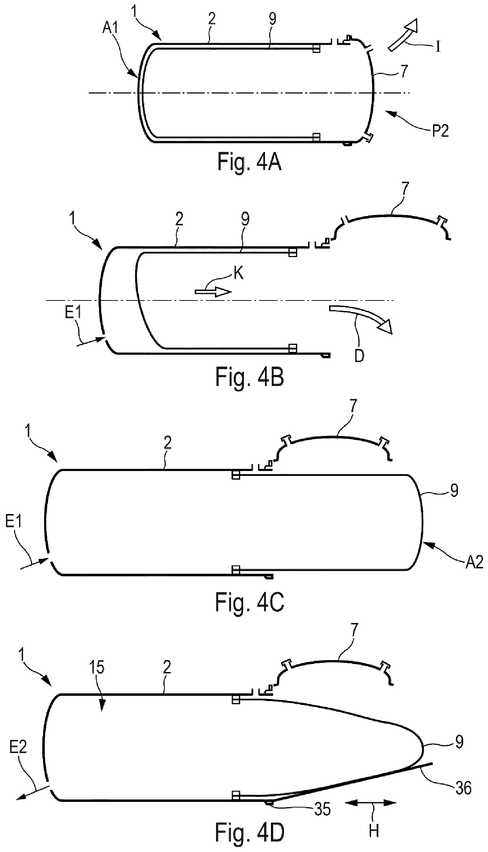

La mise en pression de l'espace libre 15 permet de repousser la membrane 9 (qui est retournée et sortie de la cuve comme représenté sur la figure 3) et de refouler les produits contenus dans la cuve 1 vers l'arrière, afin de les évacuer à travers la porte 7 ouverte, comme décrit ci-dessous en référence aux figures 4A à 4D.

La mise en dépression de l'espace libre 15 permet, quant à elle, de plaquer la membrane 9 contre la face interne 12A de la cuve 1 afin de l'amener dans une position dite « de contenant » de façon à permettre le remplissage de son espace interne 11 de stockage, à travers un orifice de remplissage 28 comme précisé ci-dessous. La membrane 9 épouse alors la forme de la face interne 12A de la cuve 1, comme représenté sur la figure 2 notamment.

La cuve 1 comporte également un générateur de vide qui correspond dans un mode de réalisation préféré au générateur de vide 26 et qui est configuré pour générer une mise en dépression de l'espace interne 11 à l'intérieur de la membrane 9 en vue d'un pompage de produits dans ladite membrane 9, comme précisé ci-dessous. Pour ce faire, le générateur de vide 26 est apte à générer un vide dans l'espace interne 11 à travers l'orifice 22, comme illustré par une flèche E3 sur la figure 2. Dans ce mode de réalisation préféré, le générateur de vide 26 est destiné à réaliser les deux fonctions suivantes: générer un vide dans l'espace libre 15 à travers l'orifice 24 et générer un vide dans l'espace interne 11 à travers l'orifice 22. Dans une variante de réalisation, la cuve 1 comporte un générateur de vide dédié, autre que le générateur de vide 26, pour générer une mise en dépression de l'espace interne 11 à l'intérieur de la membrane 9 en vue d'un pompage de produits dans ladite membrane 9 à travers l'orifice 22.

Dans un mode de réalisation particulier, la cuve 1 comporte une couronne 34 à haute pression agencée à l'arrière de la zone de fixation 27 de la membrane 9 sur la cuve 1. Cette couronne 34 représentée schématiquement permet, dans la position sortie A2 de la figure 3, de nettoyer la partie haute de la membrane 9 et d'expulser les produits restants sur la partie basse.

En outre, dans un mode de réalisation particulier, on prévoit, de plus, deux vérins 35 ou plus, qui sont agencés à l'arrière de la cuve 2. Ces vérins 35 sont agencés au bas de la cuve 2, de part et d'autre de cette dernière. Ces vérins 35 sont configurés pour pouvoir être amenés dans une position rétractée (figures 1 à 3) ou dans une position étendue vers l'arrière dans laquelle les tiges 36 des vérins 35 sont sorties, comme représenté sur la figure 4D. Les tiges 36 sont orientées de manière à monter vers l'arrière, par exemple d'un angle de l'ordre de 40° par rapport à l'horizontale. Les vérins 35 sont amenés dans la position étendue lorsque la membrane 9 est sortie de la cuve 1. Ces vérins 35 permettent de soutenir la membrane 9 lorsqu'elle est complètement sortie et qu'elle n'est plus soumise à une pression d'expulsion, comme précisé ci-dessous.

Par ailleurs, la porte 7 de la cuve 1 est pourvue :
- dans une partie haute, d'au moins un orifice 28 de remplissage et d'évacuation, pourvu d'une vanne et d'un bouchon 29 amovible apte à fermer orifice 28 lorsqu'il est en place (figure 1) et à libérer l'orifice 28 lorsqu'il est enlevé (figure 2), orifice 28 de remplissage et d'évacuation comprenant également des moyens de raccordement d'un conduit (non représenté) ; et
- dans une partie basse, d'au moins un orifice d'évacuation 30 (ou de vidange ou de décantation), pourvu d'une vanne et d'un bouchon 31 amovible apte à fermer l'orifice d'évacuation 30 lorsqu'il est en place (figure 1) et à libérer l'orifice d'évacuation 30 lorsqu'il est enlevé. L'orifice d'évacuation 30 peut être pourvu d'un filtre (non représenté) destiné à uniquement laisser passer des liquides. L'orifice d'évacuation 30 comprend également des moyens de raccordement d'un conduit (non représenté) pour l'évacuation de liquides.

La cuve 1, telle que décrite ci-dessus, peut être remplie ou chargée à l'aide d'un procédé de remplissage (ou de chargement) décrit ci-après, en référence à la figure 2.

Pour ce faire, la porte 7 est fermée, et amenée dans la position fermée P2.

Puis, une dépression appropriée est générée dans l'espace libre 15 (entre la cuve 1 et la membrane 9), à l'aide du générateur de vide 26 par tirage au vide (comme illustré par la flèche E2), de manière à plaquer la membrane 9 contre la face interne 12A de la cuve 1.

Ensuite, le vide est créé dans l'espace interne 11 au travers de l'orifice 22, à l'aide du générateur de vide 26 (ou d'un autre générateur de vide), comme illustré par la flèche E3.

Dans cette position fermée P2, telle que représentée sur la figure 2, les produits à pomper, situés à l'extérieur de la cuve 1, sont poussés sous la pression atmosphérique dans l'espace interne 11 (dans laquelle est créé le vide), à l'aide de moyens usuels de pompage (non représentés), à travers un orifice de remplissage prévu dans la cuve 1, et notamment à travers l'orifice de remplissage 28 pratiqué dans la porte 7, comme illustré par une flèche B1. Les produits pénètrent à l'intérieur de la membrane 9, dans l'espace interne 11 de stockage.

Quand le remplissage est terminé, on arrête la dépression générée dans l'espace interne 11 à l'aide du générateur de vide 26.

Si la cuve 1 n'est pas complètement remplie, il est possible de maintenir les produits en position (ou de les bloquer) notamment pour réduire la mobilité de la masse liquide. Pour ce faire, on génère une pression appropriée dans l'espace libre 15 à l'aide du générateur d'air comprimé 25 pour déplacer la membrane 9 et adapter le volume de l'espace interne 11 de stockage au volume de produit contenu à l'intérieur de la membrane 9. Ce maintien est notamment avantageux lors d'un déplacement de la cuve, en particulier lorsqu'elle est montée sur un véhicule, en permettant d'éviter des mouvements intempestifs des liquides contenus dans les produits lors d'un roulage.

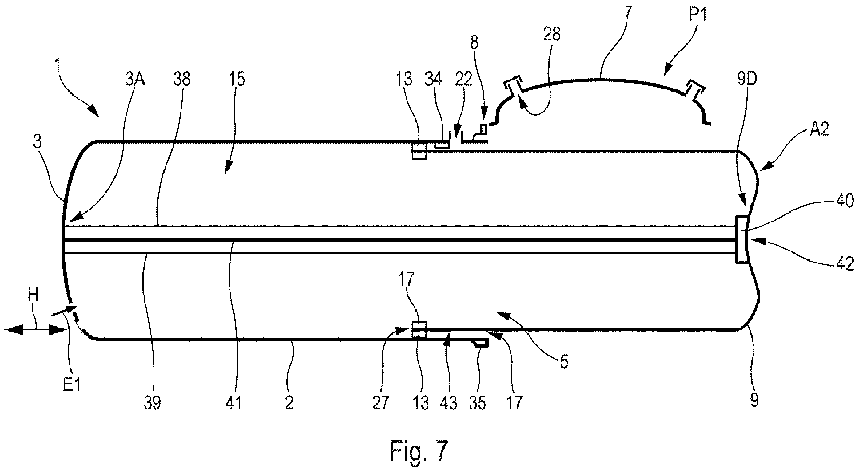

Dans un mode de réalisation particulier représenté sur la figure 7, la cuve 1 comporte des tendeurs 38 et 39 élastiques qui sont fixés, d'une part, sur une face interne avant 3A du fond 3 de la virole 2 de la cuve 1, et d'autre part, sur un bouclier 40 fixé sur une face interne arrière 9D de la membrane 9 lorsqu'elle est retournée vers l'extérieur de la cuve 1. Le bouclier 40, par exemple de forme circulaire, est fixé sensiblement au centre de la membrane 9. Les tendeurs 38 et 39 maintiennent la membrane 9 en position horizontale, durant la période de passage pression/dépression de l'espace libre 15, c'est-à-dire entre le moment où l'espace libre 15 (qui était sous pression de sorte que la membrane 9 est retournée et complètement sortie de la cuve 1) n'est plus mis sous pression et le moment où l'espace libre 15 est mis en dépression (pour faire rentrer la membrane 9 dans la cuve 1).

Les tendeurs 38 et 39 permettent également de maintenir la membrane 9 à l'horizontale, afin de faciliter la rentrée de la membrane 9 dans la cuve 1.

Dans le mode de réalisation particulier représenté sur la figure 7, la cuve 1 comporte également un câble 41 rigide qui est fixé, d'une part, sur la face interne avant 3A du fond 3 de la virole 2 de la cuve 1, et d'autre part, sur le bouclier 40. Le câble 41 rigide permet de retenir la membrane 9 en cas d'éclatement de cette dernière. Ce câble 41 permet également un certain retournement interne de la membrane 9 comme illustré par une courbure concave 42 de la membrane 9, ce qui limite la sortie longitudinalement de la membrane 9, et facilite un retournement (vers l'intérieur) lors de ladite période de passage pression/dépression.

La cuve 1, telle que décrite ci-dessus, est également apte à mettre en œuvre un essorage de produits semi-liquides, notamment des boues, contenus dans l'espace interne 11 de stockage.

Pour ce faire, la porte arrière 7 de la cuve 1 est fermée, comme représenté sur la figure 2. L'espace libre 15 entre la face interne 12A de la cuve 1 et la face externe 9B de la membrane 9 est mis sous pression à l'aide du générateur d'air comprimé 25. Cette mise sous pression comprime les produits semi-liquides de manière à générer une séparation de l'eau et des jus qui se retrouvent dans la partie haute de la cuve 1 et qui peuvent être évacués par l'orifice 28 prévu dans la partie haute de la porte 7, comme illustré par une flèche B2 en tirets (la vanne étant ouverte et le bouchon 29 étant bien entendu enlevé dans ce cas).

Par ailleurs, la cuve 1, telle que décrite ci-dessus, peut être vidée (ou déchargée) en restant à l'horizontale, à l'aide d'un procédé de vidange (ou de déchargement) décrit ci-après en référence aux figures 4A à 4D.

Pour réaliser la vidange, en partant de la position fermée P2 de la figure 4A avec la membrane 9 dans une position A1 en contact de la paroi interne de la cuve, la porte 7 est ouverte, comme montré par une flèche I, et elle est amenée dans sa position ouverte P1 (figure 4B).

L'espace libre 15, entre la face interne 12A de la cuve 1 et la face externe 9B de la membrane 9, est mis sous pression (contrôlée) à l'aide du système 16 pour générer une mise en pression, comme illustré par la flèche E1.

La mise en pression permet de repousser la membrane 9 et la déplacer, comme illustré par une flèche K sur la figure 4B.

Plus précisément, la mise en pression permet de déplacer la membrane 9, entre la position A1 (représentée sur la figure 4A) dans laquelle elle est plaquée contre la face interne 12A de la cuve 1 et une position A2 (représentée sur la figure 4C) dans laquelle elle est complètement retournée et déployée vers l'arrière.

Pour la mise en pression, on injecte une pression d'air comprimé dans l'espace libre 15. Cet air comprimé peut, par exemple, être stocké dans une bouteille de 300 litres à 10 bars.

En position de remplissage de la cuve 1, la membrane 9 reste plaquée sur la partie interne de la cuve 1. Lors de la vidange, la membrane 9 se retourne en expulsant à l'extérieur de la cuve 1 les produits stockés à l'intérieur de la membrane 9. Ceci permet une évacuation rapide et efficace des produits.

Le déplacement de la membrane 9 permet donc de refouler les produits contenus dans la cuve 1, vers l'arrière, et de les évacuer (ou éjecter) à travers la porte 7 ouverte, comme illustré par une flèche D sur la figure 4B.

Les vérins 35 sont amenés dans la position étendue lorsque la membrane 9 est sortie de la cuve 1, comme représenté sur la figure 4D. Les pistons 36 des vérins 35 permettent de soutenir la membrane 9 lorsqu'elle est complètement sortie et qu'elle n'est plus soumise à une pression d'expulsion, mais est de nouveau aspirée dans la cuve 1 par la génération d'une dépression dans l'espace libre 15 comme illustré par une flèche E2 sur la figure 4D.

Un avantage de la cuve 1 est une meilleure garantie pour éviter la production d'ATEX qui serait rejeté par la pompe à vide lors d'opérations de pompage particulières comme, par exemple, le pompage de 5000 litres sur 10000 litres de capacité. Ces 5000 litres pompés, on peut bloquer le liquide vers l'arrière avec la membrane. Pour pomper les 5000 litres suivants, il suffit de pomper de nouveau du côté de la membrane et ainsi, on peut recréer le vide sans pour autant pomper des ATEX puisque la membrane étanche sépare du vide. Il n'est plus nécessaire de dégazer la cuve 1 pour répéter plusieurs opérations de pompage.

La cuve 1, telle que décrite ci-dessus, peut correspondre à tout type de cuve (ou citerne), qui est destinée au stockage de produits et notamment des produits semi-liquides, des produits pâteux ou des solides pulvérulents. La cuve peut être installée à poste fixe ou être montée sur un engin (ou véhicule) mobile, notamment un véhicule roulant.

Dans une application préférée, la cuve 1 est une cuve d'un véhicule de collecte de déchets, et plus particulièrement d'un hydrocureur 32, comme représenté sur la figure 6. L'hydrocureur 32 est destiné, notamment, à assurer des opérations de curage et de pompage de réseaux d'eaux usées et d'ouvrages d'assainissement. L'hydrocureur 32 est équipé des moyens nécessaires au remplissage et à la vidange de la cuve 1 et notamment du système de mise en pression et de mise en dépression.

En raison de la vidange en position horizontale, sans nécessiter de basculement de la cuve 1, l'encombrement est réduit et de nombreux équipements 33 de l'hydrocureur 32 peuvent être agencés sur la cuve 1 ou à proximité de cette dernière, ce qui a pour avantage la réalisation de l'hydrocureur en deux modules, à savoir d'une part la cuve et des éléments fixés à la cuve et d'autre part un module d'équipements, comprenant un système de pompage. Ces deux modules sont facilement démontables et adaptables d'un châssis porteur à un autre. Cette mobilité de l'équipement permettant l'interchangeabilité du porteur est un avantage important dans le cadre de l'évolution environnementale actuelle des porteurs.

La cuve 1, telle que décrite ci-dessus, présente de nombreux avantages. En particulier, la solution proposée a pour avantages :
- d'être une solution légère, avec un gain de charge utile d'environ 500 kilogrammes, dans l'application à un hydrocureur ;
- de pouvoir vider le contenu de la cuve 1 à l'horizontale, sans basculement (ou bennage), ce qui permet de supprimer les dispositifs usuels, statiques ou mobiles, destinés à générer la vidange notamment par gravité ;
- de pouvoir réaliser une vidange sécurisée, rapide et totale de la cuve 1 ;
- de pouvoir bloquer les liquides en phase de transport ;
- de pouvoir transporter tous types de produits et notamment des produits agressifs, grâce à la membrane 9 qui peut être rendue inaltérable en particulier aux produits pétroliers ou acides ;
- de pouvoir protéger la cuve 1 métallique, à l'aide de la membrane 9 ;
- de présenter un encombrement réduit ;
- de réduire le coût de construction et d'exploitation (par rapport à un dispositif usuel articulé) ;
- de pouvoir sécuriser les opérations de vidange (en supprimant l'instabilité des camions avec une cuve à basculer) et de transport (en supprimant la mobilité de la masse liquide des déchets dans la cuve) ; et
- d'augmenter la productivité, par exemple, en essorant par compression les boues, dans les cas où de l'eau peut être restituée sur le site de remplissage de la cuve.

## Revendications

1. Cuve pour stocker des produits, en particulier des produits semi-liquides, pâteux ou solides pulvérulents, ladite cuve (1) comportant une virole (2) pourvue d'une ouverture (5) à une extrémité longitudinale (6) arrière et une porte (7) apte à fermer cette ouverture (5),
**caractérisée en ce qu'**elle comporte, de plus, au moins :
- une membrane (9) souple et étanche aux gaz et aux liquides, destinée à recevoir les produits à stocker, ladite membrane (9) étant pourvue d'une ouverture (10), étant agencée à l'intérieur de la cuve (1) de sorte que son ouverture (10) est en regard de l'ouverture (5) de la virole (2), et étant fixée suivant une zone de fixation (27) annulaire à la face interne (12A) de la virole (2) autour de son ouverture (10) de manière à créer un espace dit libre (15) fermé, entre la membrane (9) et la cuve (1), la membrane (9) étant fixée à une distance (D) prédéterminée de l'ouverture (5) de la virole (2) de manière à former une zone dite arrière (43) entre la zone de fixation (27) et l'ouverture (5) de la virole (2), ladite distance (D) étant comprise entre 30 centimètres et 1 mètre ; et
- un système (16) pour générer une mise en pression et une mise en dépression de l'espace libre (15) entre la cuve (1) et la membrane (9).

2. Cuve selon la revendication 1,
**caractérisée en ce que** la membrane (9) est configurée pour :
- pouvoir être complètement plaquée contre la face interne de la virole (2) sous l'effet d'une mise en dépression générée par ledit système (16) ;
- pouvoir être retournée et sortie de la cuve (1), à travers ladite porte (7) ouverte, sous l'effet d'une mise en pression générée par ledit système (16),

3. Cuve selon la revendication 2,
**caractérisée en ce qu'**elle comporte au moins l'un des éléments suivants :
- au moins un tendeur (38, 39) élastique fixé d'une part à une face interne avant (3A) de la virole (2) et d'autre part à une face interne arrière (9D) de la membrane (9) lorsqu'elle est retournée vers l'extérieur de la cuve (1) ;
- au moins un câble de maintien(41) rigide fixé d'une part à la face interne avant (3A) de la virole (2) et d'autre part à la face interne arrière (9D) de la membrane (9) lorsqu'elle est retournée vers l'extérieur de la cuve (1).

4. Cuve selon l'une quelconque des revendications précédentes, **caractérisée en ce que** la membrane (9) est fixée par pincement entre une couronne (13) fixée sur la face interne (12A) de la cuve (1) et au moins une contre-plaque (17).

5. Cuve selon l'une quelconque des revendications précédentes, **caractérisée en ce que** la membrane (9) est réalisée en un matériau composite (18) comprenant différentes couches superposées, formées au moins d'une toile étanche (19), d'un tissu (20) et d'une peau (21) en polytrétrafluoroéthylène.

6. Cuve selon l'une quelconque des revendications précédentes, **caractérisée en ce qu'**elle comporte au moins deux vérins (35) agencés à l'arrière de la cuve (1), aptes à être amenés d'une position rétractée à une position étendue lorsque la membrane (9) est sortie de la cuve (1).

7. Cuve selon l'une quelconque des revendications précédentes, **caractérisée en ce qu'**elle comporte une couronne (34) à haute pression agencée à l'arrière de la zone de fixation (27) de la membrane (9) sur la cuve (1).

8. Cuve selon l'une quelconque des revendications précédentes, **caractérisée en ce que** le système (16) pour générer une mise en pression et une mise en dépression comprend au moins un orifice (23, 24) pratiqué dans la cuve (1) et aboutissant dans ledit espace libre (15).

9. Cuve selon l'une quelconque des revendications précédentes, **caractérisée en ce que** le système (16) pour générer une mise en pression et une mise en dépression comporte un générateur d'air comprimé (25) et un générateur de vide (26).

10. Cuve selon l'une quelconque des revendications précédentes, **caractérisée en ce qu'**elle comporte un générateur de vide (26) qui est configuré pour générer une mise en dépression d'un espace interne (11) à l'intérieur de la membrane (9), à travers une ouverture (22) pratiquée dans ladite zone arrière (43), en vue d'un pompage de produits dans ladite membrane (9).

11. Cuve selon l'une quelconque des revendications précédentes, **caractérisée en ce que** la porte (7) est pourvue d'au moins un orifice (28) de remplissage et d'évacuation et de moyens (29) configurés pour pouvoir ouvrir et fermer ledit orifice (28) de remplissage et d'évacuation.

12. Véhicule, en particulier un hydrocureur,
**caractérisé en ce qu'**il comporte au moins une cuve (1) selon l'une quelconque des revendications 1 à 11.

13. Procédé de remplissage de la cuve (1) selon l'une quelconque des revendications 1 à 11,
**caractérisé en ce qu'**il comprend au moins les étapes suivantes, consistant à :
- fermer la porte (7) de la cuve (1) ;
- générer une mise en dépression de l'espace libre (15) entre la cuve (1) et la membrane (9), à l'aide du système de mise en dépression (16), de manière à plaquer la membrane (9) contre la face interne (12A) de la cuve (1) ;
- générer une mise en dépression de l'espace interne (11) à l'aide du système de mise en dépression (26) afin que la pression atmosphérique pousse les produits dans cet espace interne (11), à travers l'orifice de remplissage (28), à l'intérieur de la membrane (9) ; et
- quand le remplissage est terminé, arrêter la mise en dépression de l'espace interne (11).

14. Procédé de vidange de la cuve (1) selon l'une quelconque des revendications 1 à 11,
**caractérisé en ce qu'**il comprend au moins les étapes suivantes, consistant à :
- ouvrir la porte (7) de la cuve (1) ;
- générer une mise en pression de l'espace libre (15) entre la cuve (1) et la membrane (9), à l'aide du système de mise en pression (16), de manière à repousser la membrane (9) et la déplacer, ce déplacement générant une éjection des produits à travers la porte (7) en position ouverte (P1) ; et
- quand la vidange est terminée, arrêter la mise en pression de l'espace libre (15).

15. Procédé d'essorage de produits de la cuve (1) selon l'une quelconque des revendications 1 à 11,
**caractérisé en ce qu'**il comprend au moins les étapes suivantes, consistant à :
- la porte (7) de la cuve (1) étant fermée, générer une mise en pression de l'espace libre (15) entre la cuve (1) et la membrane (9), à l'aide du système de mise en pression (16), de manière à repousser la membrane (9) et la déplacer, ce déplacement comprimant les produits présents dans la cuve (1) de manière à générer une séparation des jus qui sont évacués par l'orifice d'évacuation (28) qui est ouvert ; et
- quand l'essorage est terminé, arrêter la mise en pression de l'espace libre (15) et fermer l'orifice d'évacuation (28).
